# EUROPÄISCHE PATENTSCHRIFT

(11) **EP 0 797 517 B1**
(45) Veröffentlichungstag und Bekanntmachung des Hinweises auf die Patenterteilung: **03.05.2000**
(21) Anmeldenummer: 96900299.7
(22) Anmeldetag: 04.01.1996
(51) Int. Cl.: B60R 19/52

(54) **FRONTSCHUTZBÜGEL**
FRONT-END PROTECTIVE BAR
ARCEAUX DE PROTECTION AVANT

(30) Priorität: 04.01.1995 DE 29500106 U
(43) Veröffentlichungstag der Anmeldung: 01.10.1997
(73) Patentinhaber: Rumpp, Klaus, 82266 Inning (DE)
(72) Erfinder: RUMPP. Gerhard, 82266 Inning (DE)
(74) Vertreter: Kuhl, Dietmar
(86) Internationale Anmeldenummer: EP9600024
(87) Internationale Veröffentlichungsnummer: WO9620852

(56) Entgegenhaltungen:
- WO-A-96/02406
- DE-A- 2 803 209
- DE-A- 2 809 374
- DE-A- 3 518 899
- DE-A- 4 328 309
- DE-U- 9 105 739
- DE-U- 9 306 545
- DE-U- 9 306 945
- DE-U- 9 409 508
- FR-A- 1 236 895
- FR-A- 1 408 921
- GB-A- 2 187 142
- US-A- 4 469 360
- US-A- 4 671 552
- US-A- 5 215 343
- PATENT ABSTRACTS OF JAPAN vol. 7, no. 110 (M-214) [1255] , 13.Mai 1983 & JP,A,58 030874 (NISSAN), 23.Februar 1983,

## Beschreibung

Die Erfindung bezieht sich auf einen Frontschutzbügel für Kraftfahrzeuge gemäß den Oberbegriffen der Patentansprüche 1 bis 3.

Wie allgemein bekannt ist, dienen Frontschutzbügel für Geländefahrzeuge als Schutz der Frontpartie des Fahrzeuges gegen Äste, Felsvorsprünge und gegen andere in den Fahrweg hineinragende Gegenstände beim Einsatz des Fahrzeugs im Gelände.

Durch den Frontschutzbügel sollen insbesondere bei rauhem Geländebetrieb die Leuchten im Frontbereich sowie der Kühlergrill mit den Lufteintrittsöffnungen zum Motorraum wirkungsvoll geschützt werden. Dazu ist der Frontschutzbügel aus einem starren Rohrgestell ausgebildet, das an der Fahrzeugkarosserie befestigt ist.

Die Geländefahrzeuge mit angebautem Frontschutzbügel werden jedoch nicht nur im Gelände, sondern auch auf öffentlichen Straßen eingesetzt. Das Verletzungsrisiko für Personen, die vom Geländefahrzeug, insbesondere dessen Frontschutzbügel erfaßt werden, ist jedoch ungleich höher, als bei Personenkraftwagen.

Ein den Oberbegriffen der Patentansprüche 1 und 3 entsprechender, aus der DE-A 28 09 374 bekannter Frontschutzbügel für ein Fahrzeug weist Stangen auf, die über Abstandsklötze aus Hartgummi oder einem ähnlichen Material miteinander verbunden sind. Mit dieser Maßnahme soll erreicht werden, daß der Schaden sowohl für das Fahrzeug selbst als auch für ein Tier, mit dem das Fahrzeug kollidiert ist, möglichst gering bleibt.

Bei einem dem Oberbegriff des Patentanspruchs 2 entsprechenden, aus der FR-A 1 236 895 bekannten Frontschutzbügel, ist die Verbindungsstelle des Frontschutzbügels mit der Karosserie durch ein Teil aus einem elastischen Material gebildet.

Der Erfindung liegt die Aufgabe zugrunde, einen einfach aufgebauten Frontschutzbügel für Kraftfahrzeuge zu schaffen, der das Verletzungsrisiko für vom Fahrzeug erfaßte Personen vermindert und trotzdem eine universelle durch Einsatzgeräte und Vorsatzgeräte optimierte Verwendbarkeit des Kraftfahrzeuges zuläßt.

Diese Aufgabe wird durch die in den kennzeichnenden Teilen der Patentansprüche 1 bis 3 angegebenen Merkmale gelöst.

Erfindungsgemäß sind entsprechend einer ersten Ausführungsform die Dämpfungselemente so aufgebaut, daß mit einem ersten Teil des Frontschutzbügels ein Behälter verbunden ist, in dem ein Dämpfungsmaterial befindlich ist. Mit einem zweiten Teil des Frontschutzbügels ist ein bewegliches Element in dem Behälter befindlich und in dem Dämpfungsmaterial eingebettet. Das bewegliche Element ist mittels des Dämpfungsmaterials gegenüber dem Behälter träg-elastisch bewegbar. Gemäß einer zweiten Ausführungsform der Erfindung sind die Dämpfungselemente so ausgebildet, daß mit einem Teil des Frontschutzbügels oder mit dem Karosserieelement ein Behälter verbunden ist, in dem ein Dämpfungsmaterial vorhanden ist. Mit dem Karosserieelement oder dem Teil des Frontschutzbügels ist ein bewegliches Element verbunden, das in dem Behälter befindlich ist und in dem Dämpfungsmaterial eingebettet ist. Das bewegliche Element ist mittels des Dämpfungsmaterial gegenüber dem Behälter träg-elastisch bewegbar. Gemäß einer dritten Ausführungsform der Erfindung weisen die Verbindungsstellen zwischen den Teilen des Frontschutzbügels und/oder die Verbindungsstellen des Frontschutzbügels mit einem Karosserieelement und/oder der Frontschutzbügel selbst Elemente auf, die durch Kräfte, die beim Personenaufprall wirken, plastisch verformbar sind. Durch die erfindungsgemäßen Ausführungsformen wird auf wirkungsvolle Weise erreicht, daß die bei der Kollision mit der Person wirkenden Kräfte so gedämpft werden, daß die Person keine Verletzungen erleidet oder zumindest das Ausmaß möglicher Verletzungen der Person auf ein Minimum beschränkt wird.

Weiterbildungen der Erfindung sind in den Unteransprüchen angegeben.

Die Erfindung wird anhand der Zeichnungen näher erläutert. Darin zeigen:
- Fig. 1A: einen an einem Geländefahrzeug befestigbaren erfindungsgemäßen Frontschutzbügel, mit integrierter heruntergeklappter Abdeckplatte,
- Fig. 1B: den am Geländefahrzeug befestigten Frontschutzbügel mit hochgeklappter Abdeckplatte und einer dadurch in einer speziellen Stoßstange frei zugänglich gewordenen Adaptionsvorrichtung für Zusatzgeräte, in der Einsatzgeräte, wie z.B. eine Seilwinde, eingebaut sind,
- Fig. 2A: eine Vorderansicht des erfindungsgemäßen Frontschutzbügels,
- Fig. 2B: eine Vorderansicht des erfindungsgemäßen Frontschutzbügels mit daran befestigter Abdeckplatte,
- Fig. 3: eine Ansicht eines Schnittes, der entlang der Linie A-A in Fig. 2A bzw. 2B verläuft,
- Fig. 4: eine Perspektivansicht eines mittleren Schutzsteges des erfindungsgemäßen Frontschutzbügels,
- Fig. 5: eine Ansicht eines Schnittes, der entlang der Linie B-B in Fig. 4 verläuft,
- Fig. 6: eine Ansicht eines Schnittes, der entlang der Linie C-C in Fig. 4 verläuft,
- Fig. 7: eine Schnittansicht des erfindungsgemäßen Frontschutzbügels mit einer Karosseriebefestigung,
- Fig. 8: eine Teilschnittansicht, die eine zweite Ausführungsform der Befestigung eines oberen Schutzsteges zeigt,
- Fig. 9: eine Teilschnittansicht, die eine dritte der Befestigung des oberen Schutzsteges zeigt, und
- Fig. 10: eine Draufsicht auf eine Schwenkhalterung.

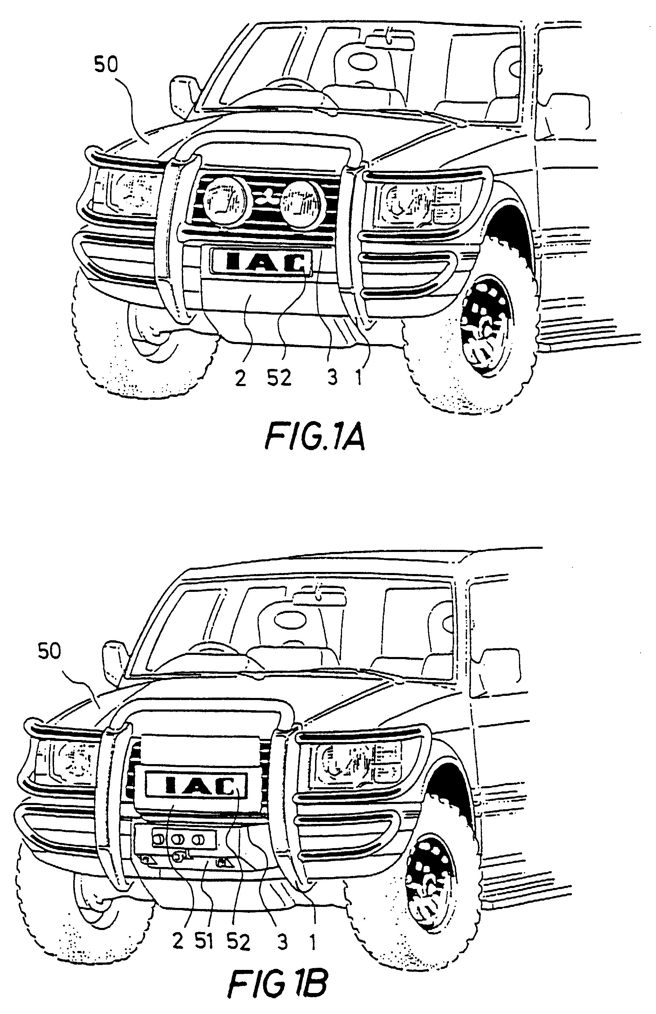

Wie aus den Fig. 1A, 1B, 7 und 10 zu sehen ist, ist ein mit 1 bezeichneter Frontschutzbügel an einem Fahrzeug 50 befestigt.

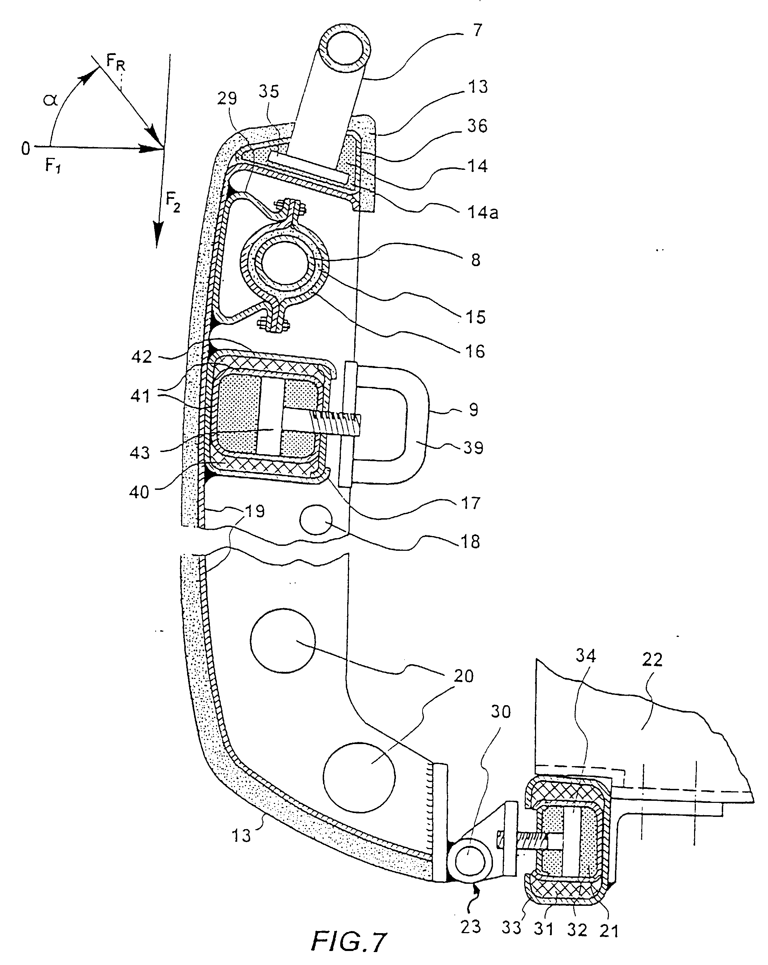

Die Befestigung des Frontschutzbügels 1 mit dem Fahrzeug, Lastwagen, Kleinlastwagen, Personentransport- oder Personenkraftwagen, bevorzugt Geländefahrzeug 50, ist in der dargestellten Ausführungsform analog zu der Befestigung ausgebildet, die aus der EP 0 156 301 B1 des Anmelders angegeben ist, und die eine Schwenkhalterung 23 und ein Verriegelungselement 9 zur Befestigung an der Karosserie des Fahrzeugs aufweist (siehe Fig. 7).

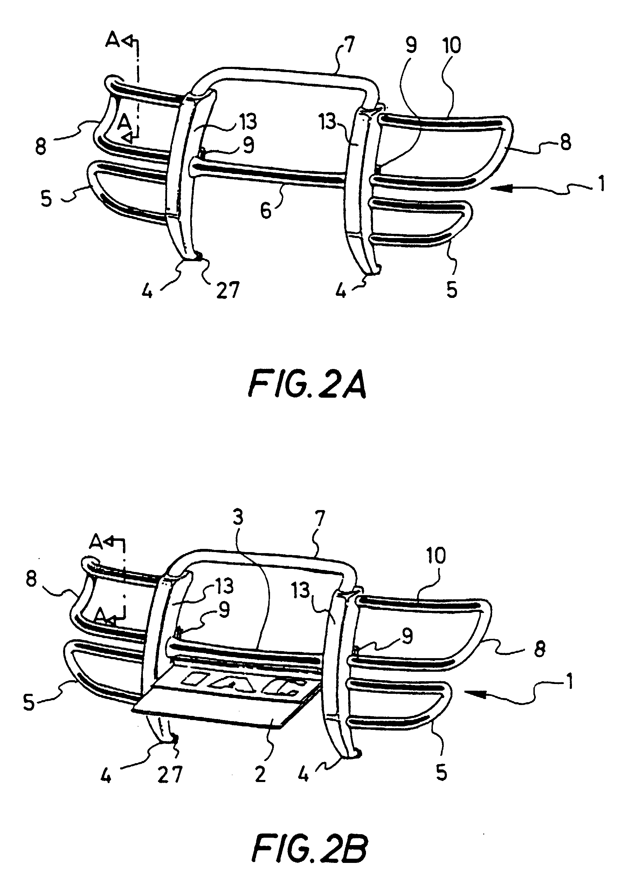

Wie aus den Fig. 1A und 1B zu entnehmen ist, ist eine Abdeckplatte 2 über eine Drehachse 3 entweder mit dem Fahrzeug selbst (siehe Fig. 2A) oder am Frontschutzbügel 1 (siehe Fig. 2B) befestigt. Die Befestigung der Drehachse 3 am Frontschutzbügel 1 erfolgt bevorzugterweise über eine nicht gezeigte Halterung an einem mittleren Schutzsteg 6. Die Abdeckplatte 2 kann um die Drehachse 3 aus einer nach unten geklappten Stellung (siehe Fig. lA), bei der eine Adaptionsvorrichtung 51 für Zusatzgeräte verdeckt ist, in eine nach oben geklappte Stellung (siehe Fig. 1B), bei der die Adaptionsvorrichtung 51 frei zugänglich ist, verschwenkt werden. Die Abdeckplatte 2 ist sowohl in ihrer nach oben geklappten Stellung als auch in der nach unten geklappten Stellung verriegelt und trägt beidseitig jeweils ein Kfz-Nummernschild 52 mit amtlichem Kennzeichen. Die Adaptionsvorrichtung 51 dient dem Ankoppeln von Vorsatzgeräten, z.B. Schneepflug, und in ihrem Inneren der Aufnahme von Einsatzgeräten, z.B. einer Seilwinde. Die Adaptionsvorrichtung 51 benötigt eine spezielle Stoßstange, in die sie integriert ist, sowie eine entsprechende Aussparung im Frontschutzbügel.

Wie in Fig. 2A und 2B zu sehen ist, besteht der Frontschutzbügel 1 aus zwei Rahmenteilen 4, die über den mittleren Schutzsteg 6 und einen oberen Schutzsteg 7 miteinander verbunden sind. Seitlich von den Rahmenteilen 4 erstrecken sich jeweils ein Spoilerschutzbügel 5 und ein Lampenschutzbügel 8.

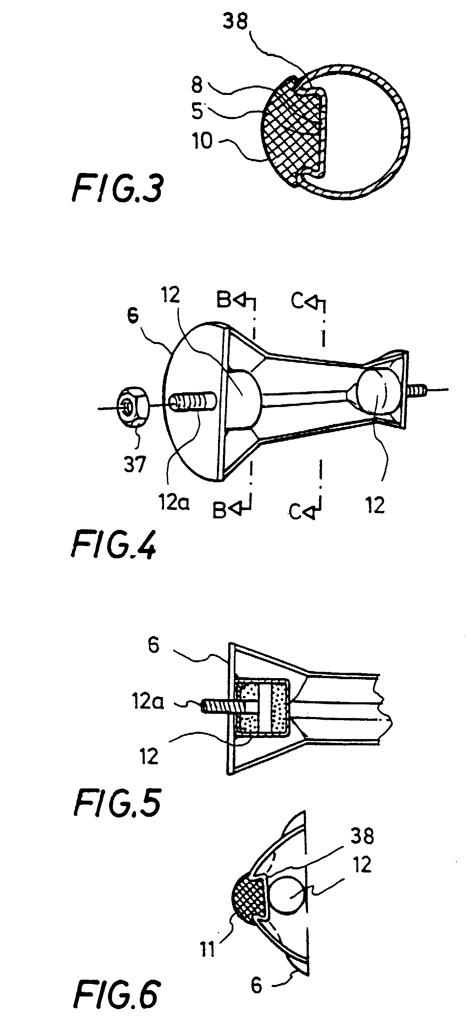

Wie nachstehend im einzelnen näher erläutert ist, sind die Verbindungsstellen der Rahmenteile 4 mit dem Fahrzeug 50, die Verbindungsstellen des mittleren Schutzsteges 6 und des oberen Schutzsteges 7 mit den Rahmenteilen 4 und die Verbindungsstellen der Spoilerschutzbügel 5 und der Lampenschutzbügel 8 mit den Rahmenteilen 4 mit gedämpft elastisch ausgebildeten Elementen versehen. Desweiteren sind der mittlere Schutzsteg 6, die Spoilerschutzbügel 5 und die Lampenschutzbügel 8 mit einem elastischen Dämpfungsmaterial versehen (siehe Fig. 3, 4 und 6), was ebenfalls nachstehend im einzelnen beschrieben wird.

Zur Minderung des Verletzungsrisikos für Personen sind die Rahmenteile 4 vorn und seitlich mit einem elastischen Material 13 (z.B. mit dem Softtouch-Material PUR-RIM weich) überzogen. Dieses Material gibt beim Aufprall mit einer Person dämpfend nach, wodurch eine noch größer werdende Aufprallfläche mit weiterer Dämpfwirkung entsteht.

Die Rahmenteile 4, die ein U-förmiges Profil aufweisen, sind in ihrem oberen Bereich durch den oberen Schutzsteg 7 und im mittleren Bereich durch den mittleren Schutzsteg 6 miteinander verbunden. Dabei ist der obere Schutzsteg 7 in Abhängigkeit von der Frontkontur des Fahrzeuges 50 aus Gründen der Minimierung des Verletzungsrisikos von Personen nach oben verlaufend und zum Fahrzeug hin gekrümmt ausgebildet. Der Schutzsteg 6 ist zwischen den Rahmenteilen 4 so positioniert, daß unterhalb von ihm in entsprechender Zuordnung zu einer speziellen Aussparung in der Stoßstange ein frei zugänglicher Raum zur Adaptionsvorrichtung 51 erzielt wird.

An einer Verbindungsstelle 14a (siehe Fig. 7) zwischen dem oberen Schutzsteg 7 und dem jeweiligen Rahmenteil 4 weist der obere Schutzsteg 7 eine Bodenplatte 35 auf, die in einem träg-elastischen Dämpfungsmaterial 14 eingebettet ist. Das träg-elastische Dämpfungsmaterial 14 wird von einem Behälter 36 aufgenommen, der in geeigneter Weise, z.B. durch Schweißen oder Verschrauben mit dem jeweiligen Rahmenteil 4 verbunden ist. Das Dämpfungsmaterial 14 ist dabei so beschaffen, daß eine Bewegung des oberen Schutzsteges 7 relativ zum jeweiligen Rahmenteil 4 sowie dessen Rückbewegung nach einem Aufprall gedämpft erfolgt. Durch den gedämpften Bewegungsablauf, der durch das Dämpfungsmaterial 14 hervorgerufen wird, als auch durch eine plastische Verformungsarbeit des Behälters 36, durch die Bodenplatte 35 und durch den weggedrückten Schutzsteg 7, werden die Wirkungen bei einem Personenaufprall für die Person vermindert. Der verformte Behälter 36 wirkt dabei einer Rückfederung des Schutzsteges 7 entgegen.

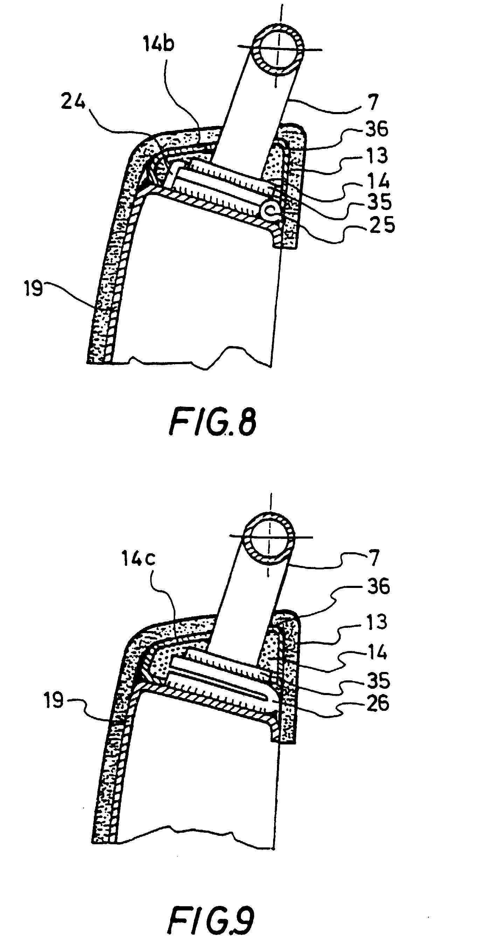

In einer zweiten Ausführungsform, die in Fig. 8 gezeigt ist, weist eine Verbindungsstelle 14b zwischen dem oberen Schutzsteg 7 und den Rahmenteilen 4 ein Scharnier 25 auf, dessen eine Hälfte mit der Bodenplatte 35 des oberen Schutzsteges 7 fest verbunden, vorzugsweise verschweißt ist. Die andere Hälfte des Scharniers 25 ist mit dem Rahmenteil 4 verbunden. Das Scharnier 25 wird mittels einer aufbiegbaren Klammer 24, die aus einem zähen, plastisch verformbaren Material besteht, zusammengehalten, wobei diese Anordnung ebenfalls innerhalb des Behälters 36 angeordnet ist, der mit dem träg-elastischen Dämpfungsmaterial 14 ausgefüllt ist. Bei einem Personenaufprall wird zunächst die Kraft überwunden, die zum Aufbiegen der Klammer 24 erforderlich ist, wobei danach ebenfalls ein gedämpfter Bewegungsablauf des oberen Schutzsteges 7 durch das träg-elastische Dämpfungsmaterial 14 und durch die Verformung des Behälters 36 herbeigeführt wird. Der Behälter 36 ist, wie in der ersten Ausführungsform, mit dem Rahmenteil 4 befestigt. Andere konstruktive Lösungen des Scharniers 25 sind möglich, z.B. kann die Scharnierachse auch vorn angeordnet sein und die Bodenplatte 35 mit der unteren Scharnierhälfte verbunden sein.

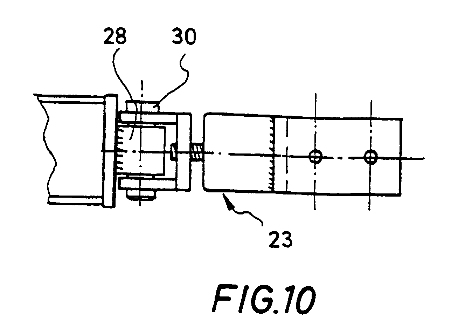

Eine dritte Ausführungsform der Verbindungsstelle 14c zwischen dem oberen Schutzsteg 7 und den Rahmenteilen 4 ist in Fig. 9 gezeigt. Ein gefaltetes Blech 26 ist mit der Bodenplatte 35 des oberen Schutzbügels 7 und dem Rahmenteil 4 verbunden. In bevorzugter Weise ist das gefaltete Blech 26 mit der Bodenplatte 35 verschweißt. In dieser Ausführungsform erzeugen die notwendige Verformungsarbeit am gefalteten Blech 26, das aus einem zähen, plastisch verformbaren Material besteht und das träg-elastische Dämpfungsmaterial 14, sowie der sich dämpfend verformende Behälter 36 die aufprallmindernde Wirkung. Der Behälter 36 ist, wie bei den beiden vorangehend beschriebenen Ausführungsformen, an dem Rahmenteil 4 auf geeignete Weise, z.B. durch Schweißen befestigt. Andere konstruktive Lösungen des gefalteten Blechs 26 sind möglich. Zum Beispiel kann die Biegestelle des gefalteten Blechs 26 auch vorn angeordnet sein und die Bodenplatte 35 mit dem unteren Teil des gefalteten Blechs 26 verbunden sein.

Wie in den Fig. 2A und 2B gezeigt ist, verbindet der mittlere Schutzsteg 6 die Rahmenteile 4 in ihrem mittleren Bereich miteinander. Eine bevorzugte Ausgestaltung des mittleren Schutzsteges 6 ist aus den Fig. 4 bis 6 ersichtlich. Wie in Fig. 6 gezeigt ist, weist der mittlere Schutzsteg 6 an seiner Vorderseite eine Profilleiste 11 aus einem Dämpfungsmaterial auf. Die Profilleiste 11 ist bevorzugterweise so ausgebildet, daß sie in einem Falz 38 (siehe Fig. 6) durch Einstecken mit dem mittleren Schutzsteg 6 befestigt wird. Andere Profilformen sowie andere Befestigungsarten, z.B. durch Kleben, sind abweichend von der dargestellten Ausführungsform ebenfalls möglich. Durch das elastische Material und die Form der Profilleiste 11 wird die Bewegung eines in die Profilleiste 11 sich eindrückenden Körpers durch die stetig zunehmende Prallfläche gedämpft.

Die Befestigung des mittleren Schutzsteges 6 an den Rahmenteilen 4 erfolgt über Stoßdämpfer 12 (siehe Fig. 4 und 5), deren Gewindeteile 12a durch Bohrungen 18 in den Rahmenteilen 4 hindurchgeführt sind und jeweils mittels einer Mutter 37, die auf das Gewindeteil 12a geschraubt wird, befestigt wird. Der Stoßdämpfer 12a ist dabei bevorzugterweise so ausgebildet, daß eine Bewegung des mittleren Schutzsteges 6 relativ zu den Rahmenteilen 4 bei einem Aufprall und die Bewegung entgegengesetzt dazu gedämpft erfolgt. Die Verwendung einseitig gedämpft wirkender Stoßdämpfer 12 ist jedoch auch möglich.

Wie aus den Fig. 4 und 5 deutlich zu sehen ist, ist das Profil des mittleren Schutzsteges 6 so ausgebildet, daß bei einem Personenaufprall eine plastische Verformung zu einer immer größer werdenden Prallfläche führt, was nochmals den Aufprall mindert.

Obwohl im einzelnen nicht gezeigt, kann auch der obere Schutzsteg 7 an seinem vorderen Bereich mit einem Dämpfungsmaterial versehen sein.

Wie aus Fig. 3 ersichtlich ist, weisen die Lampenschutzbügel 8 und die Spoilerschutzbügel 5 an ihrer Vorderseite jeweils Profilleisten 10 aus einem Dämpfungsmaterial auf. Die Profilleiste 10 ist bevorzugterweise so ausgebildet, daß sie in einem Falz 38 siehe Fig. 3) durch Einstecken mit dem Spoilerschutzbügel 5 bzw. dem Lampenschutzbügel 8 befestigt wird. Hinsichtlich der Form und der Eigenschaften ist die Profilleiste 10 zur Profilleiste 11 gleichartig ausgebildet. Modifikationen hinsichtlich der Form und der Befestigungsart sind hierbei aber ebenfalls möglich.

Wie Fig. 7 zeigt, ist eine Halterung 29 jeweils mit der Innenseite der Rahmenteile 4, z.B. durch Schweißen, verbunden. Die Halterung 29 trägt eine Rohrschelle 16, die ein ringförmiges, träg-elastisches Dämpfungsmaterial 15 aufnimmt, in das das entsprechende Ende des jeweiligen Lampenschutzbügels 8 eingebettet ist. In gleicher Weise werden die Spoilerschutzbügel 5 durch Bohrungen 20 in den inneren, U-förmigen Bereich der Rahmenteile 4 geführt, und dort wie die Enden der Lampenschutzbügel 8 befestigt.

Die Aufprallminderung wird durch die Lampenschutzbügel 8 und die Spoilerschutzbügel 5 dadurch erreicht, daß die Person, die mit den Lampenschutzbügeln 8 bzw. den Spoilerschutzbügeln 5 in Kollision gerät, die aus Dämpfungsmaterial bestehenden Profilleisten 10 eindrückt, und daß bei größeren Kräften das träg-elastische Dämpfungsmaterial 15 und danach die Halterung 29 selbst plastisch verformt wird. Da sowohl die Bewegung der Spoilerschutzbügel 5 und der Lampenschutzbügel 8 bei einem Aufprall sowie deren Rückbewegung gedämpft erfolgt, werden die Wirkungen während der Kollision für die Person gemildert. Dieser Effekt wird zusätzlich noch dadurch unterstützt, daß die Lampenschutzbügel 8 und die Spoilerschutzbügel 5 aus einem nur geringfügig zurückfedernden Material bestehen, und daß sowohl die Spoilerschutzbügel 5 als auch die Lampenschutzbügel 8, soweit die kraftfahrzeugseitig möglich ist, an ihren äußeren Enden in Klammern elastisch eingeklinkt werden (nicht gezeigt), die ihrerseits an einer geeigneten Stelle der Karosserie des Fahrzeugs, z.B. am Kotflügel, der nach seiner Verformung wenig zurückfedert, befestigt sind. Obwohl in Fig. 3 der Querschnitt des Spoilerschutzbügels 5 bzw. des Lampenschutzbügels 8 im wesentlichen kreisförmig ausgebildet ist, sind auch andere geeignete Profilformen möglich.

Wie in Fig. 7 und 10 gezeigt wird, ist der Frontschutzbügel 1 über die Schwenkhalterung 23 und das Verriegelungselement 9 mit dem Fahrzeug 50 verbunden. Fahrzeugseitig ist an einem Karosserieelement 22 ein vorzugsweise doppelseitig wirkender und sich rücksprungmindernd sich verformender Stoßdämpfer 21 mit seinen träg-elastischen Eigenschaften befestigt, der an seinem vorderen Ende über einen Bolzen 30 eine Aufnahme 28 schwenkbar trägt, so daß der Frontschutzbügel 1 um den Bolzen 30 verschwenkbar ausgebildet ist. Vorzugsweise ist der Frontschutzbügel 1 über zwei Schwenkhalterungen 23 mit dem Fahrzeug 50 verbunden.

Beim Aufprall einer Person im Kniebereich mit der Stoßstange des Fahrzeuges knickt die betroffene Person ein, wodurch auch vertikal wirkende Kraftkomponenten auf den Frontschutzbügel 1 wirken. Wie aus Fig. 7 ersichtlich ist, wirkt eine Kraft F_{R} in einem Winkel a zur Horizontalen, wobei der Winkel α sich im Bereich von 0 bis ca. 45° erstreckt. Die Kraft F_{R} hat eine horizontale Kraftkomponente F₁ und eine vertikale Kraftkomponente F₂. Zur Aufnahme der vertikalen, insbesondere nach unten wirkenden Kraftkomponente F₂ weist der Stoßdämpfer 21 ein ringförmig ausgebildetes Dämpfungselement 31 auf, das am Innenumfang eine Hülse 32 zur Führung eines Stoßdämpferkolbens 34 aufweist. Am Außenumfang wird das Dämpfungselement 31 von einer mit dem Karosserieelement 22 verbundenen Aufnahme 32 gestützt. Da das Dämpfungselement 31 in radialer Richtung wirkt, können auch vertikal aufgebrachte Kräfte durch dieses aufgenommen werden.

Vorzugsweise sind zwei Verriegelungselemente 9 vorgesehen, die in einer nicht gezeigten Verriegelungseinrichtung des Kraftfahrzeuges verriegelbar sind. Die Verriegelungselemente 9 sind mit bevorzugterweise doppelseitig wirkenden Stoßdämpfern 17 verbunden. Die Stoßdämpfer 17 sind mit ringförmig ausgebildeten Dämpfungselementen 40 ausgebildet, die am Innenumfang Hülsen 41 zum Führen von Stoßdämpferkolben 43 aufweisen. Am Außenumfang werden die Dämpfungselemente 40 von Aufnahmen 41 aufgenommen, die mit einer Innenseite 19 der Rahmenteile 4 befestigt sind. Somit werden auch von den Stoßdämpfern 17 vertikale Kraftkomponenten aufgenommen.

Die Stoßdämpfer 17 weisen die schon oben beschriebenen träg-elastische Eigenschaften auf, so daß ein Eindrücken des Frontschutzbügels 1 zum Fahrzeug 50 hin ohne wesentliches Rückspringen gedämpft erfolgt.

Die Verwendung einseitig dämpfend wirkender Stoßdämpfer 17 und 21 ist jedoch auch möglich. Das Verriegelungselement 9 weist eine aufschraubbare und damit justierbare Öse 39 auf.

Obwohl im einzelnen nicht in der Zeichnung gezeigt, kann auch die Schwenkhalterung 23 mit einem zwischen Bolzen 30 und Aufnahme 28 wirkenden Dämpfungseinrichtung ausgebildet sein.

In einer nicht gezeigten Ausführungsform können die vertikalen Kraftkomponenten F₂ auch durch in Vertikalrichtung wirkende Dämpfungsanordnungen an dem Bolzen 30 bzw. den Verriegelungselementen 9 aufgenommen werden.

Die Stoßdämpfer 12, 17 und 21 sind in ihrem Aufbau den im wesentlichen rücksprungfreien Dämpfungselementen ähnlich, die in dem DE-GM 93 07 059.4 und in der EP 92 110 549.0 näher beschrieben sind.

Die Stoßdämpfer 12, 17 und 21 sind jedoch nicht auf die beschriebene Ausführungsform beschränkt. Vielmehr können auch Stoßdämpfer, die mit einem flüssigen Medium (Öl) oder einem gasförmigen Medium (Luft) wirken, verwendet werden. Desweiteren sind auch Stoßdämpfer einsetzbar, die mittels Reibung arbeiten. Auch eine Spiralfeder, die aus mehreren, miteinander verwundenen Drahtlitzen besteht, ist aufgrund der Eigenreibung und des damit gedämpften Bewegungsverhaltens einsetzbar.

Der Frontschutzbügel kann aus Metall, einem Kunststoff oder einer Metall-Kunststoff-Kombination bestehen.

Obwohl in der bevorzugten Ausführungsform der Frontschutzbügel abklappbar ausgebildet ist, ist die Erfindung darauf nicht beschränkt. Auch andere, allgemein bekannte Befestigungsarten zwischen Frontschutzbügel und Fahrzeug sind möglich. Bei der dargestellten Ausführungsform besteht jedoch der Vorteil, daß zur Reinigung der Frontpartie als auch bei kleineren Reparaturen an der Frontpartie ein schneller Zugang erreicht werden kann.

Durch die verschwenkbar ausgebildete Abdeckplatte 2 besteht die Möglichkeit, die Adaptionsvorrichtung 51 für Zusatzgeräte in der Stellung gemäß Fig. 1A vor Verschmutzung, Beschädigung od. dgl. zu schützen und in der in Fig. 1B gezeigten Stellung für das Ankoppeln der Zusatzgeräte und die Anwendung der in ihr eingebauten Einsatzgeräte zugänglich zu machen.

Durch die offene Gestaltung im unteren mittleren Bereich des Frontschutzbügels 1 und in Kombination mit einer in ihrem mittleren Bereich Durchgriff bietenden Stoßstange, wird der freie Raum geschaffen, der Zugang, Anwendung und Einsatz der Adaptionsvorrichtung 51 gewährleistet.

Der Frontschutzbügel 1 gemäß der vorangehend beschriebenen Ausführungsformen erfüllt sowohl die Forderungen an einen herkömmlichen Rammschutz als auch die Forderungen hinsichtlich der Milderung der Folgen eines Aufpralls für Personen.

Der Frontschutzbügel 1 kombiniert mit einer entsprechenden Aussparung in einer Stoßstange oder ähnlichem Bauteil ist in entsprechender Anpassung auch im hinteren Bereich eines Lastwagens, Kleinlastwagens, Personentransport- oder Personenkraftwagens, bevorzugterweise eines Geländewagens ebenso erfindungsgemäß anzuordnen und zu installieren.

## Patentansprüche

1. Frontschutzbügel für Kraftfahrzeuge, Lastwagen, Kleinlastwagen, Personentransport- oder Personenkraftwagen, insbesondere Geländefahrzeuge, wobei Verbindungsstellen (12; 14a; 14b; 14c; 16, 29) zwischen Teilen (4, 5, 6, 7, 8) des Frontschutzbügels (1) untereinander Dämpfungs-Elemente (12: 14, 36; 15, 16) aufweisen, die gegenüber Kräften, die bei einem Personenaufprall wirken, gedämpft nachgiebig ausgebildet sind, **dadurch gekennzeichnet**, daß die Dämpfungs-Elemente (12; 14, 36; 15, 16) so aufgebaut sind, daß mit einem ersten Teil des Frontschutzbügels (1) ein Behälter (16; 36) verbunden ist, in dem ein Dämpfungsmaterial (14; 15) befindlich ist, und mit einem zweiten Teil des Frontschutzbügels ein in dem Dämpfungsmaterial (14; 15) eingebettetes, in dem Behälter (16; 36) bewegliches Element (35) verbunden ist, wobei das bewegliche Element (35) mittels des Dämpfungsmaterials (14; 15) gegenüber dem Behälter (16; 36) träg-elastisch bewegbar ist.

2. Frontschutzbügel für Kraftfahrzeuge, Lastwagen, Kleinlastwagen, Personentransport- oder Personenkraftwagen, insbesondere Geländefahrzeuge, wobei Verbindungsstellen (9; 23) des Frontschutzbügels (1) mit einem Karosserieelement (22) Dämpfungs-Elemente aufweisen, die gegenüber Kräften, die bei einem Personenaufprall wirken, gedämpft nachgiebig ausgebildet sind, **dadurch gekennzeichnet**, daß die Dämpfungs-Elemente so ausgebildet sind, daß mit einem Teil (4) des Frontschutzbügels (1) oder mit dem Karosserieelement (22) ein Behälter (41; 32) verbunden ist, in dem ein Dämpfungsmaterial (14) befindlich ist, und mit dem Karosserieelement (22) oder dem Teil des Frontschutzbügels (1) ein in dem Dämpfungsmaterial (14) eingebettetes, in dem Behälter (41; 32) bewegliches Element (43; 34) verbunden ist, wobei das bewegliche Element (43; 34) mittels des Dämpfungsmaterials (14) gegenüber dem Behälter (41; 32) träg-elastisch bewegbar ist.

3. Frontschutzbügel für Kraftfahrzeuge, Lastwagen, Kleinlastwagen, Personentransport- oder Personenkraftwagen, insbesondere Geländefahrzeuge, wobei Verbindungsstellen (14a; 14b; 14c; 5, 8, 12, 29) zwischen den Teilen (4, 5, 6, 7, 8) des Frontschutzbügels (1) untereinander Elemente (6; 16; 24; 25; 26; 29; 36) aufweisen, die gegenüber Kräften, die bei einem Personenaufprall wirken, gedämpft nachgiebig ausgebildet sind, **dadurch gekennzeichnet**, daß die Verbindungsstellen (14a; 14b; 14c; 5, 8, 12, 29) zwischen den Teilen (4, 5, 6, 7, 8) des Frontschutzbügels (1) und/oder die Verbindungsstellen (17; 21) des Frontschutzbügels (1) mit einem Karosserieelement (22) und/oder der Frontschutzbügel (1) selbst Elemente (6; 16; 24; 25; 26; 29; 36) aufweisen, die durch die Kräfte, die beim Personenaufprall wirken, plastisch verformbar sind.

4. Frontschutzbügel nach einem der Ansprüche 1 oder 2, **dadurch gekennzeichnet**, daß das Dämpfungsmaterial (14; 15) träg-elastisches Dämpfungsmaterial ist.

5. Frontschutzbügel nach einem der Ansprüche 1 bis 4, **gekennzeichnet durch** zwei Rahmenteile (4), die mit vorzugsweise einem oberen Schutzsteg (7) und mit vorzugsweise einem mittleren Schutzsteg (6) miteinander verbunden sind, und mit denen sich seitlich erstreckend jeweils vorzugsweise ein Spoilerschutzbügel (5) und vorzugsweise ein Lampenschutzbügel (8) verbunden ist.

6. Frontschutzbügel nach Anspruch 5, **dadurch gekennzeichnet**, daß die Rahmenteile (4) vorn und seitlich mit einem elastischen Material (13) überzogen sind, das so ausgebildet ist, daß es sich beim Aufprall eindrückt und damit dämpfend die Aufprallfläche vergrößert.

7. Frontschutzbügel nach Anspruch 6, **dadurch gekennzeichnet**, daß das elastische Material (13) PUR-RIM weich ist.

8. Frontschutzbügel nach einem der Ansprüche 5 bis 7, **dadurch gekennzeichnet**, daß der obere Schutzsteg (7) nach oben verlaufend und zum Fahrzeug hin gekrümmt ausgebildet ist.

9. Frontschutzbügel nach einem der Ansprüche 5 bis 8, **dadurch gekennzeichnet**, daß der mittlere Schutzsteg (6) an seinem in Fahrtrichtung vorderen Bereich eine erste Profilleiste (11) aus einem Dämpfungsmaterial aufweist.

10. Frontschutzbügel nach einem der Ansprüche 5 bis 9, **dadurch gekennzeichnet**, daß die Spoilerschutzbügel (5) und die Lampenschutzbügel (8) an ihrem in Fahrtrichtung vorderen Bereich jeweils eine zweite Profilleiste (10) aus einem Dämpfungsmaterial aufweisen.

11. Frontschutzbügel nach einem der Ansprüche 5 bis 10, **dadurch gekennzeichnet**, daß an der Verbindungsstelle (14a) zwischen dem Rahmenteil (4) und dem oberen Schutzsteg (7) ein Ende des oberen Schutzsteges (7) jeweils eine Bodenplatte (35) aufweist, die in dem träg-elastischen Dämpfungsmaterial (14) eingebettet ist, das von dem Behälter (36), der mit dem Rahmenteil (4) verbunden ist, aufgenommen wird.

12. Frontschutzbügel nach einem der Ansprüche 5 bis 10, **dadurch gekennzeichnet**, daß an der Verbindungsstelle (14b) zwischen dem Rahmenteil (4) und dem oberen Schutzsteg (7) dessen Bodenplatte (35) mit einer Hälfte eines Scharniers (25) und die andere Hälfte des Scharniers (25) mit dem Rahmenteil (4) verbunden ist, und daß die Hälften des Scharniers (25) mit einer aufbiegbaren Klammer (24) zusammengehalten werden, wobei das Ende des Schutzsteges (7), dessen Bodenplatte (35), das Scharnier (25) und die zugehörige Klammer (24) in dem träg-elastischen Dämpfungsmaterial (14) eingebettet sind, das von dem Behälter (36) ummantelt wird.

13. Frontschutzbügel nach einem der Ansprüche 5 bis 10, **dadurch gekennzeichnet**, daß an der Verbindungsstelle (14c) zwischen dem Rahmenteil (4) und dem oberen Schutzsteg (7) dessen Bodenplatte (35) mit einem Teil eines gefalteten Blechs (26) verbunden ist und das Rahmenteil (4) mit einem anderen Teil des gefalteten Blechs (26) verbunden ist, wobei das Ende des Schutzsteges (7), dessen Bodenplatte (35) und das gefaltete Blech (26) in dem träg-elastischen Dämpfungsmaterial (14) eingebettet sind, das von dem Behälter (36) ummantelt wird.

14. Frontschutzbügel nach einem der Ansprüche 11 bis 13, **dadurch gekennzeichnet**, daß der Behälter (36) aus einem Material besteht, welches sich bei einer Kollision mit dem oberen Schutzsteg (7) arbeitskräftebindend verformt und in der Verformung beharren bleibt, wodurch ein Rückfedern der Verbindungselemente und insbesondere des Schutzsteges (7) weitestgehend verhindert wird.

15. Frontschutzbügel nach einem der Ansprüche 5 bis 14, **dadurch gekennzeichnet**, daß die Dämpfungs-Elemente als erste Stoßdämpfer (12) ausgebildet sind, die den mittleren Schutzsteg (6) mit den Rahmenteilen (4) verbinden.

16. Frontschutzbügel nach einem der Ansprüche 5 bis 15, **dadurch gekennzeichnet**, daß das Profil des mittleren Schutzsteges (6) so ausgebildet ist, daß eine durch einen Aufprall hervorgerufene Verformung zu einer größer werdenden Prallfläche führt.

17. Frontschutzbügel nach einem der Ansprüche 5 bis 16, **dadurch gekennzeichnet**, daß die Spoilerschutzbügel (5) und die Lampenschutzbügel (8) von einer Halterung (29) mit einer Rohrschelle (16) gehaltert werden, wobei jeweils zwischen dem Spoilerschutzbügel (5) bzw. dem Lampenschutzbügel (8) und der Halterung (29) mit der Rohrschelle (16) das träg-elastische Dämpfungsmaterial (15) angeordnet ist.

18. Frontschutzbügel nach einem der Ansprüche 5 bis 17, **dadurch gekennzeichnet**, daß die Dämpfungs-Elemente als zweite Stoßdämpfer (17) und dritte Stoßdämpfer (21) ausgebildet sind, die den Frontschutzbügel (1) mit dem Karosserieelement (22) des Fahrzeugs (50) verbinden.

19. Frontschutzbügel nach Anspruch 18, **gekennzeichnet durch** eine Schwenkhalterung (23) zur verschwenkbaren Befestigung des Frontschutzbügels (1) mit dem Fahrzeug (50), wobei die Schwenkhalterung (23) den dritten Stroßdämpfer (21) aufweist.

20. Frontschutzbügel nach Anspruch 18 oder 19, **dadurch gekennzeichnet**, daß der zweite Stoßdämpfer (17) mit dem Rahmenteil (4) verbunden ist und ein Verriegelungselement (9) zum Verriegeln mit dem Fahrzeug (50) aufweist.

21. Frontschutzbügel nach einem der Ansprüche 15 bis 20, **dadurch gekennzeichnet**, daß erster, zweiter und dritter Stoßdämpfer (12, 17, 21) beidseitig dämpfend wirkend ausgebildet sind und eine Ummantelung besitzen, welche die Verformungsarbeit überwiegend durch Verformen aufnimmt, in der Verformung beharrt und ein Rückfedern weitestgehend verhindert.

22. Frontschutzbügel nach einem der Ansprüche 1 bis 21, **dadurch gekennzeichnet**, daß der Frontschutzbügel (1) aus Metall besteht.

23. Frontschutzbügel nach einem der Ansprüche 1 bis 21, **dadurch gekennzeichnet**, daß der Frontschutzbügel (1) aus Kunststoff besteht.

24. Frontschutzbügel nach einem der Ansprüche 1 bis 21, **dadurch gekennzeichnet**, daß der Frontschutzbügel (1) aus einer Metall-Kunststoff-Kombination besteht.

25. Frontschutzbügel nach einem der Ansprüche 1 bis 24, **gekennzeichnet durch** um eine Drehachse (3) schwenkbare Abdeckplatte (2) zum Abdecken und Freigeben einer Adaptionsvorrichtung (51) für Zusatzgeräte, in derem Inneren Einsatzgeräte einbaubar sind.

26. Frontschutzbügel nach Anspruch 25, **dadurch gekennzeichnet,** daß der mittlere Schutzsteg (6) eine Halterung für die Drehachse (3) aufweist.

27. Frontschutzbügel nach Anspruch 24 oder 25, **dadurch gekennzeichnet**, daß die Abdeckplatte (2) in einer nach unten geklappten Stellung, bei der die Adaptionsvorrichtung (51) verdeckt ist, und in einer nach oben geklappten Stellung, bei der die Adaptionsvorrichtung (51) freigegeben ist, jeweils verriegelbar ist.

28. Frontschutzbügel nach einem der Ansprüche 17 bis 27, **dadurch gekennzeichnet**, daß die Halterung (29) und die Rohrschelle (16) plastisch verformbar ausgebildet sind.

29. Frontschutzbügel nach einem der Ansprüche 17 bis 28, **dadurch gekennzeichnet**, daß die Spoilerschutzbügel (5) und die Lampenschutzbügel (8) an ihren freien Enden, die mit dem Fahrzeug (50) verbunden sind, elastisch gehalten werden.

30. Frontschutzbügel nach einem der Ansprüche 1 bis 29, **dadurch gekennzeichnet**, daß er im mittleren unteren Bereich zusammen mit einer Kraftfahrzeugstoßstange, die so geformt ist, daß sie mittig einen Durchgriff läßt, einen freien Raum schafft, in dem die durch die Abdeckplatte (2) geschützte Adaptionsvorrichtung (51) für das Ankoppeln der Zusatzgeräte und für das Anwenden von eingebauten Einsatzgeräten zugänglich wird.

31. Frontschutzbügel nach einem der Ansprüche 1 bis 30, **dadurch gekennzeichnet**, daß er in entsprechend abgewandelter Form in Verbindung mit einer entsprechend abgewandelten Stoßstange im hinteren Bereich des Lastwagens, des Kleinlastwagens, des Personentransport- oder Personenkraftwagens anwendbar ist.

32. Frontschutzbügel nach einem der Ansprüche 18 bis 31, **dadurch gekennzeichnet**, daß der zweite und dritte Stoßdämpfer (17, 21) ein Dämpfungsteil (31; 40) zur Aufnahme von vertikal wirkenden Kraftkomponenten (F₂) aufweist.

33. Frontschutzbügel nach Anspruch 32, **dadurch gekennzeichnet**, daß das Dämpfungsteil (31; 40) ringförmig ausgebildet ist, an seinem Innenumfang eine Hülse (32; 41) aufweist und an seinem Außenumfang von einer Aufnahme (33; 42) gestützt wird.

## Claims

1. A front guard for motor vehicles, in particular for vans, small vans, passenger transport vehicles or passenger cars, in particular off-road vehicles, wherein connection points (12; 14a; 14b, 14c; 16, 29) between members (4, 5, 6, 7, 8) of the front guard (1) comprise damping elements (12; 14, 36; 15, 16) that are absorbent and pliable with respect to forces that prevail during an impact with a person, **characterized in that** the damping elements (12; 14, 36; 15, 16) are designed such that a container (16; 36) is connected to the first part of the front guard (1), with damping material (14; 15) being located in the container, and an element (35) is connected to the second part of the front guard, said element being embedded into the damping material (14; 15) and being movable in the container (16; 36), wherein said movable element (35) is inert-resiliently movable by means of the damping material (14; 15) with respect to the container (16; 36).

2. A front guard for motor vehicles, vans, small vans, passenger transport vehicles or passenger cars, in particular off-road vehicles, wherein connection points (9; 23) of the front guard with a chassis element (22) have damping elements that are absorbent and pliable with respect to forces that prevail during an impact with a person, **characterized in that** the damping elements are designed such that a container (41; 32) is connected to a first part of the front guard (1) or with the chassis element (22), with a damping material (14) being located in the container, and that an element (43; 34) is connected to the chassis element (22) or the part of the front guard (1), said element (43, 34) being embedded in the damping material (14) and being movable in the container (41; 32), wherein the movable element (43; 34) is inert-resiliently movable by means of the damping material (14) with respect to the container (41; 32).

3. A front guard for motor vehicles, vans, small vans, passenger transport vehicles or passenger cars, in particular off-road vehicles, wherein connection points (14a; 14b; 14c; 5, 8, 12, 29) between members (4, 5, 6, 7, 8) of the front guard (1) comprise elements (6; 16; 24; 25; 26; 29; 36) that are absorbent and pliable with respect to forces that prevail during an impact with a person, **characterized in that** the connection points (14a; 14b; 14c; 5, 8, 12, 29) between the members (4, 5, 6, 7, 8) of the front guard (1) and/or the connection points (17; 21) of the front guard (1) itself comprise elements (6; 16; 24; 25; 26; 29; 36) that are plastically deformable by forces that prevail during an impact with a person.

4. A front guard according to one of claims 1 or 2, **characterized in that** the damping material (14; 15) is an inert-resilient damping material.

5. A front guard according to one of claims 1 to 4 **characterized by** two frame members (4) that are connected to one another by preferably one upper protector web (7) and preferably a central protector web (6), and to which preferably a spoiler guard (5) and preferably a lamp guard (8) are connected each extending laterally.

6. A front guard according to claim 5, **characterized in that** the front and the sides of the frame members (4) are coated by an elastic material (13) which is provided such that it is impressed in case of an impact and thereby dampingly enlarges the surface of impact.

7. A front guard according to claim 6 **characterized in that** the elastic material (13) is PUR-RIM soft.

8. A front guard according to one of claims 5 to 7, **characterized in that** the upper protector web (7) extends upwardly and curved towards the motor vehicle.

9. A front guard according to one of claims 5 to 8, **characterized in that** the central web (6) has on its front portion seen in driving direction a first profile ledge (11) made of an absorbent material.

10. A front guard according to one of claims 5 to 9, **characterized in that** the spoiler guards (5) and the lamp guards (8) on their front portions seen in driving direction, each comprise a second profile ledge (10) made of an absorbent material.

11. A front guard according to one of claims 5 to 10, **characterized in that** at the connection point (14a) between the frame member (4) and the upper protector web (7) one end of the upper protector web (7) each has a bottom plate (35), which is embedded into an inert-elastic damping material (14), which is accommodated by a container (36) that is connected to the frame member (4).

12. A front guard according to one of claims 5 to 10, **characterized in that** at the connection point (14b) between the frame member (4) and the upper protector web (7) the bottom plate (35) of the same is connected to a half of a hinge (25) and the other half of the hinge (25) is connected to the frame member (4), and that the halves of the hinge (25) are held together by a clip (24) that can be bent open, wherein the end of the protector web (7), the bottom plate (35) thereof, the hinge (25) and the accompanying clip (24) are embedded in an inert-elastic damping material (14) which is encompassed by a container (36).

13. A front guard according to one of claims 5 to 10, **characterized in that** at the connection point (14c) between the frame member (4) and the upper protector web (7) the bottom plate (35) thereof is connected to a portion of the folded sheet (26), and the frame member (4) is connected to the other portion of the folded sheet (26), wherein the end of the protective web (7), the bottom plate (35) thereof and the folded sheet (26) are embedded in an inert-elastic damping material (14) which is encompassed by a container (36).

14. A front guard according to one of claims 11 to 13, **characterized in that** the container (36) and consists of a material which deforms in a manner combining the working forces during a collision with the upper protector guard (7), and stays in the deformation, which substantially prevents a resiliency of the connection elements and in particular of the guard (7).

15. A front guard according to one of claims 5 to 14, **characterized in that** the damping elements are provided as first shock absorbers (12) which connect the central protector web (6) with the frame members (4).

16. A front guard according to one of claims 5 to 15, **characterized in that** the profile of the central protector web (6) is provided in a manner that a deformation caused by an impact leads to an enlarging deflector.

17. A front guard according to one of claims 5 to 16, **characterized in that** the spoiler guards (5) and the lamp guards (8) are held by a support (29) with a pipe clamp (16), wherein between the spoiler guard (5) or the lamp guard (8) and the support (29) with the pipe clamp (16) and annularly formed inert-elastic damping material (15) is arranged.

18. A front guard according to one of claims, 5 to 17, **characterized in that** the damping elements are provided as second shock absorbers (17) and third shock absorbers (12) which connect the front guard (1) with the chassis element (22) of the motor vehicle (50).

19. A front guard according to claim 18, **characterized by** a pivot support (23) for pivotally attaching the front guard (1) to the motor vehicle (50), wherein the pivot support (23) comprises the third shock absorber (21).

20. A front guard according to claim 18 or 19, **characterized in that** the second shock absorber (17) is connected to the frame member (4) and comprises a locking element (9) for a locking to the motor vehicle (50).

21. A front guard according to one of claims 15 to 20, **characterized in that** the first, second and third shock absorber (12, 17, 21) are provided on both sides in an absorbing manner, and have a coating which absorbs the deformation work mostly by deformation, which stays in the deformation and substantially prevents a resiliency.

22. A front guard according to one of claims 1 to 21, **characterized in that** the front guard (1) is made of metal.

23. A front guard according to one of claims 1 to 21, **characterized in that** the front guard (1) is made of plastics.

24. A front guard according to one of claims 1 to 21, **characterized in that** the front guard (1) is made of a metal-plastics combination.

25. A front guard according to one of claims 1 to 24, **characterized by** a cover plate (2) pivotal about a rotary axle (3) for covering and releasing an adapter device (51) for accessories, with inset apparatus being mountable in its interior.

26. A front guard according to claim 25, **characterized in that** the central protector web (6) comprises a support for the rotary axle (3).

27. A front guard according to claim 24 or 25, **characterized in that** the cover plate (2) can be locked in a downwardly folded position in which the adapter device (51) is covered, and in an upwardly folded position, in which the adapter device (51) is released.

28. A front guard according to one of claims 17 to 27, **characterized in that** the support (29) and the pipe clamp (16) are plastically deformable.

29. A front guard according to one of claims 17 to 28, **characterized in that** the spoiler guards (5) and the lamp guards (8) are elastically held at their free ends that are connected to the motor vehicle.

30. A front guard according to one of claims 1 to 30, **characterized in that** it creates a free space in the central lower portion together with a vehicular fender, which is formed in a manner that it permits a central opening, with the adapter device 51 becoming accessible in said free space and being protected by the cover plate 2 for the coupling of the accessories and for the use of installed insert apparatus.

31. A front guard according to one of claims 1 to 30, **characterized in that** the front guard can be used in a modified form in connection with an appropriately modified fender in the rear area of the van, the small van, the person transport vehicle or the passenger car.

32. A front guard according to one of claims 18 to 31, **characterized in that** the second and the third shock absorber (17, 21) comprise an absorbing element (31; 40) for absorbing vertically active force components (F2).

33. A front guard according to claim 32, **characterized in that** the damping element (31; 40) is provided annularly, and comprises a sleeve (32; 41) at its inner circumference and is supported by an seat (33; 42) at its outer circumference.

## Revendications

1. Arceau de protection avant pour véhicules automobiles, camions, camionnettes, véhicules de transport de personne ou voitures particulières, en particulier véhicules tout terrain, des points de liaison (12; 14a; 14b; 14c; 16, 29) entre des parties (4, 5, 6, 7, 8) de l'arceau de protection avant (1) présentant des éléments d'amortissement (12; 14, 36; 15, 16) les uns sous les autres, qui sont réalisés de façon à être déformables de façon amortie par rapport à des efforts agissant en cas d'impact envers des personnes, caractérisé en ce que les éléments d'amortissement (12; 14, 36; 15, 16) sont construits de manière qu'à une première partie de l'arceau de protection avant (1) soit relié un caisson (16; 36), dans lequel se trouve un matériau d'amortissement (14; 15), et à une deuxième partie de l'arceau de protection avant étant relié un élément (35) noyé dans le matériau d'amortissement (14; 15), mobile dans le caisson (16; 36), l'élément mobile (35) étant déplacable avec une élasticité accompagnée d'inertie par rapport au caisson (16; 36), au moyen du matériau d'amortissement (14; 15).

2. Arceau de protection avant pour des véhicules automobiles, camions, camionnettes, véhicules de transport de personne ou voitures particulières, en particulier véhicules tout terrain, où des points de liaison (9; 23) de l'arceau de protection avant (1) présentent des éléments d'amortissement avec un élément de carrosserie (22), éléments qui sont réalisés déformable de façon amortie par rapport à des efforts agissant en cas d'impact envers des personnes, caractérisé en ce que les éléments d'amortissement sont réalisés de manière qu'à une partie (4) de l'arceau de protection avant (1) ou à l'élément de carrosserie (22) est relié un caisson (41; 32) dans lequel se trouve un matériau d'amortissement (14) et, à l'élément de carrosserie (22) ou à une partie de l'arceau de protection avant (1), est relié un élément (43; 34) noyé dans le matériau d'amortissement (14), mobile dans le caisson (41; 32), l'élément mobile (43; 34) étant déplacable élastiquement accompagné d'une inertie par rapport au caisson (41; 32), au moyen du matériau d'amortissement (14).

3. Arceau de protection avant pour des véhicules automobiles, camions, camionnettes, véhicules de transport de personne ou voitures particulières, en particulier véhicules tout terrain, où des points de liaison (14a; 14b; 14c; 5, 8, 12, 29) entre les parties (4, 5, 6, 7, 8) de l'arceau de protection avant (1) présentent des éléments (6; 16; 24; 25; 26; 29; 36) placés les uns sous les autres, réalisés de façon à être déformable accompagnés d'un amortissement par rapport à des efforts agissant en cas d'impact envers une personne, caractérisé en ce que les points de liaison (14a; 14b; 14c; 5, 8, 12, 29) entre les parties (4, 5, 6, 7, 8) de l'arceau de protection avant (1) et/ou les points de liaison (17; 21) de l'arceau de protection avant (1) avec un élément de carrosserie (22) et/ou l'arceau de protection avant (1) lui-même présente des éléments (6; 16; 24; 25; 26; 29; 36) déformables de façon plastique du fait des efforts agissant en cas d'impact envers une personne.

4. Arceau de protection avant selon l'une des revendications 1 ou 2, caractérisé en ce que le matériau d'amortissement (14; 15) est un matériau d'amortissement présentant une élasticité accompagnée d'inertie.

5. Arceau de protection avant selon l'une des revendications 1 à 4, caractérisé par deux parties de cadre (4) reliées ensemble à l'aide de préférence d'une nervure de protection supérieure (7) et de préférence d'une nervure de protection médiane (6) et auquel sont reliés, en s'étendant latéralement chaque fois de préférence, un arceau de protection de déflecteur (5) et de préférence un arceau de protection de lampe (8).

6. Arceau de protection avant selon la revendication 5, caractérisé en ce que les parties de cadre (4) sont revêtues à l'avant et latéralement d'un matériau élastique (13) réalisé de manière à s'enfoncer en cas d'impact et ainsi augmentant avec effet amortissant l'aire de la surface d'impact.

7. Arceau de protection avant selon la revendication 6, caractérisé en ce que le matériau élastique (13) est un PUR (polyuréthane) -RIM souple.

8. Arceau de protection avant selon l'une des revendications 5 à 7, caractérisé en ce que la nervure de protection supérieure (7) est réalisée en s'étendant vers le haut et incurvée en direction du véhicule.

9. Arceau de protection avant selon l'une des revendications 5 à 8, caractérisé en ce que la nervure de protection médiane (6) présente sur sa zone avant dans la direction de roulage une première bande profilée (11) constituée d'un matériau d'amortissement.

10. Arceau de protection avant selon l'une des revendications 5 à 9, caractérisé en ce que l'arceau de protection de déflecteur (5) et l'arceau de protection de lampe (8) présentent, sur leur zone situées à l'avant dans la direction de roulage, chaque fois une deuxième bande profilée (10) réalisée en un matériau d'amortissement.

11. Arceau de protection avant selon l'une des revendications 5 à 10, caractérisé en ce que, au point de liaison (14a) entre la partie cadre (4) et la nervure de protection supérieure (7), une extrémité de la nervure de protection supérieure (7) présente chaque fois une plaque de fond (35) qui est noyée dans le matériau d'amortissement (14) présentant une élasticité accompagnée d'inertie, qui est logée par le caisson (36) relié à la partie cadre (4).

12. Arceau de protection avant selon l'une des revendications 5 à 10, caractérisé en ce que, au point de liaison (14b) entre la partie cadre (4) et la nervure de protection supérieure (7), sa plaque de fond (35) est reliée à une moitié d'une charnière (25) et l'autre moitié de la charnière (25) étant reliée à la partie cadre (4), et en ce que les moitiés de la charnière (25) sont assemblées à l'aide d'une pince (24) pouvant s'ouvrir par pliage, l'extrémité de la nervure de protection (7), sa plaque de fond (35), la charnière (25) et la pince (24) afférente étant noyées dans le matériau d'amortissement (14) présentant une élasticité accompagnée d'inertie, qui est enveloppé par le caisson (36).

13. Arceau de protection avant selon l'une des revendications 5 à 10, caractérisé en ce que, au point de liaison (14c) entre la partie cadre (4) et la nervure de protection supérieure (7), sa plaque de fond (35) est reliée à une partie d'une tôle pliée (26) et la partie cadre (4) est reliée à une autre partie de la tôle pliée (26), l'extrémité de la nervure de protection (7), sa plaque de fond (35) et la tôle pliée (26) sont noyées dans le matériau d'étanchéité (14) présentant une élasticité accompagnée d'inertie, enveloppé par le caisson (36).

14. Arceau de protection avant selon l'une des revendications 11 à 13, caractérisé en ce que le caisson (36) est constitué d'un matériau qui, en cas de collision avec la nervure de protection supérieure (7), se déforme avec une liaison sous l'effet des forces de travail et qui reste en état de déformation, faisant qu'un rappel élastique des éléments de liaison et, en particulier de la nervure de protection (7), est empêché au maximum.

15. Arceau de protection avant selon l'une des revendications 5 à 14, caractérisé en ce que les éléments d'amortissement sont réalisés sous la forme de premier amortisseur de choc (12), reliant la nervure de protection médiane (6) aux parties cadre (4).

16. Arceau de protection avant selon l'une des revendications 5 à 15, caractérisé en ce que le profil de la nervure de protection médiane (6) est tel qu'une déformation provoquée par un impact mène à une augmentation de l'aire de la surface d'impact.

17. Arceau de protection avant selon l'une des revendications 5 à 16, caractérisé en ce que l'arceau de protection de déflecteur (5) et l'arceau de protection de lampe (8) sont maintenus par une fixation (29) avec un collier pour tube (16), le matériau d'amortissement (15) présentant une élasticité accompagnée d'inertie étant chaque fois disposé entre l'arceau de protection de déflecteur (5) ou l'arceau de protection de lampe (8) et la fixation (29) avec le collier pour tube (16).

18. Arceau de protection avant selon l'une des revendications 5 à 17, caractérisé en ce que les éléments d'amortissement sont réalisés sous la forme de deuxième amortisseurs de choc (17) et de troisième amortisseurs de choc (21) qui relient l'arceau de protection avant (1) à l'élément de carrosserie (22) du véhicule (50).

19. Arceau de protection avant selon la revendication 18, caractérisé par une fixation pivotante (23) destinée à fixer de façon pivotante l'arceau de protection avant (1) au véhicule (50), la fixation pivotante (23) présentant le troisième amortisseur de choc (21).

20. Arceau de protection avant selon la revendication 18 ou 19, caractérisé en ce que le deuxième amortisseur de choc (17) est relié à la partie cadre (4) et présente un élément de verrouillage (9) pour effectuer le verrouillage au véhicule (50).

21. Arceau de protection avant selon l'une des revendications 15 à 20, caractérisé en ce que les premier, deuxième et troisième amortisseurs de choc (12, 17, 21) sont réalisés de façon à agir avec amortissement sur les deux côtés et ont un enveloppement qui supporte le travail de déformation principalement par déformation, reste à l'état de déformation et empêche au maximum tout rappel élastique.

22. Arceau de protection avant selon l'une des revendications 1 à 21, caractérisé en ce que l'arceau de protection avant (1) est réalisé en métal.

23. Arceau de protection avant selon l'une des revendications 1 à 21, caractérisé en ce que l'arceau de protection avant (1) est réalisé en matière synthétique.

24. Arceau de protection avant selon l'une des revendications 1 à 21, caractérisé en ce que l'arceau de protection avant (1) est constitué d'une combinaison métal-matière synthétique.

25. Arceau de protection avant selon l'une des revendications 1 à 24, caractérisé par une plaque de recouvrement (2) pouvant pivoter autour d'un axe de rotation (3), pour recouvrir et libérer un dispositif d'adaptation (51) destiné à des appareils additionnels, à l'intérieur desquels peuvent être montés des accessoires.

26. Arceau de protection avant selon la revendication 25, caractérisé en ce que la nervure de protection médiane (6) présente une fixation pour l'axe de rotation (3).

27. Arceau de protection avant selon la revendication 24 ou 25, caractérisé en ce que la plaque de recouvrement (2) est verrouillable, respectivement, dans une position rabattue vers le bas dans laquelle le dispositif d'adaptation (51) est caché et dans une position rabattue vers le haut, dans laquelle le dispositif d'adaptation (51) est libéré.

28. Arceau de protection avant selon l'une des revendications 17 à 27, caractérisé en ce que la fixation (29) et le collier pour tube (16) sont réalisés de façon à être déformable plastiquement.

29. Arceau de protection avant selon l'une des revendications 17 à 28, caractérisé en ce que l'arceau de protection de déflecteur (5) et l'arceau de protection de lampe (8) sont maintenus élastiquement à leurs extrémités libres reliées au véhicule (50).

30. Arceau de protection avant selon l'une des revendications 1 à 29, caractérisé en ce que dans la zone inférieure médiane conjointement, avec un pare-chocs de véhicule automobile qui est conformé de manière à laisser centralement un passage d'accès, il crée un espace libre dans lequel le dispositif d'adaptation (51) protégé par la plaque de recouvrement (2) est accessible pour accoupler les appareils additionnels et pour effectuer l'application d'accessoires intégrées.

31. Arceau de protection avant selon l'une des revendications 1 à 30, caractérisé en ce qu'il est applicable sous une variante de forme correspondante, en liaison avec une variante correspondante du pare-chocs dans la zone arrière du camion, de la camionnette, du véhicule de transport de personne ou de la voiture particulière.

32. Arceau de protection avant selon l'une des revendications 18 à 31, caractérisé en ce que le deuxième et le troisième amortisseurs de choc (17, 21) présentent une partie d'amortissement (31; 40) pour supporter les composantes de force (F₂) agissant verticalement.

33. Arceau de protection avant selon la revendication 32, caractérisé en ce que la partie d'amortissement (31; 40) est en forme d'anneau, présente sur sa périphérie intérieure une douille (32; 41) et est soutenue, par un support (33; 42), sur sa périphérie extérieure.
